# EUROPEAN PATENT APPLICATION

(11) **EP 2 645 290 A2**
(43) Date of publication of application: **02.10.2013**
(21) Application number: 13161719.3
(22) Date of filing: 28.03.2013
(51) Int. Cl.: G06F 21/36

(54) **Devices and methods for unlocking a lock mode**

(30) Priority: 29.03.2012 KR 20120032217
(71) Applicant: Samsung Electronics Co., Ltd, Gyeonggi-do 443-742 (KR)
(72) Inventor: Seo, Jae-Min, Gyeonggi-do (KR); Park, Jae-Sun, Gyeonggi-do (KR)
(74) Representative: Nederlandsch Octrooibureau

(57) **Abstract**

Methods and devices for unlocking a lock mode are provided. The method includes receiving handwriting when receiving a request for unlocking a screen, providing a handwriting detection window, reading coordinate information of at least one or more strokes handwritten in the handwriting detection window, deriving first character information from the read coordinate information, and determining if the first character information are consistent with preset second character information, and if so, unlocking the screen; otherwise, keeping the screen locked.

## Description

### TECHNICAL FIELD OF THE INVENTION

The present disclosure relates to an device and an method for unlocking a lock mode, particularly, using handwriting detection.

### BACKGROUND OF THE INVENTION

At present, owing to the growth of the electronic communication industry, portable terminals such as mobile communication terminals (i.e., cellular phones), electronic schedulers, personal complex terminals and the like are becoming a necessity to modern society while becoming a significant means of delivery of rapidly changing information.

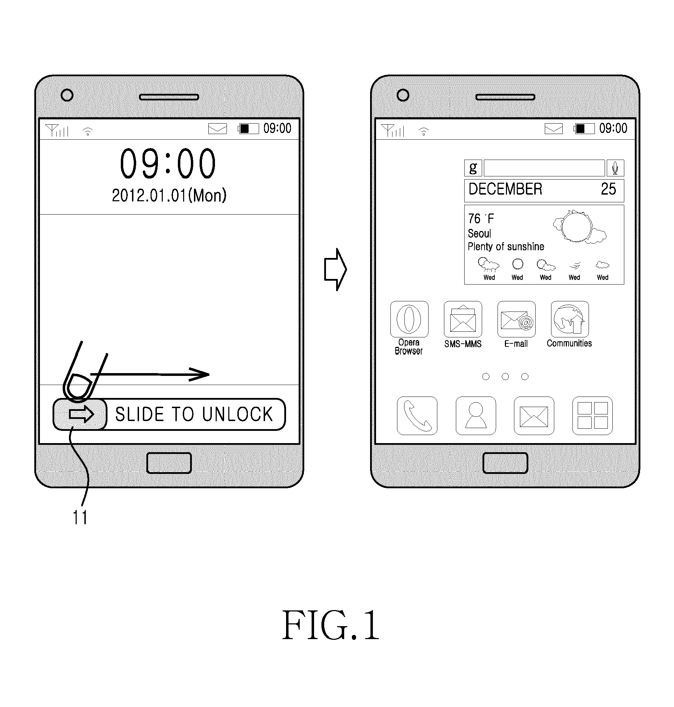

As widely known in the art, in recent years, as the use of a touch screen based on a Graphic User Interface (GUI) increases, portable electronic devices have a clear tendency to prefer the touch screen. Generally, the portable electronic device with the touch screen provides a locked screen. FIG. 1 illustrates a locked screen provided in a portable electronic device with a touch screen according to the conventional art. Referring to FIG. 1, the locked screen provides a slide bar 11. In detail, the locked screen provides a User eXperience (UX) of unlocking the touch screen by sliding the slide bar 11 from the left side of the locked screen to the right side. However, because the locked screen permits anyone to unlock the touch screen, it would provide unsatisfactory security.

### SUMMARY OF THE INVENTION

To address the above-discussed deficiencies of the prior art, it is an object of the invention to provide a device and a method for unlocking a screen using handwriting detection.

A further object of the invention is to provide a device and a method for executing an application using handwriting detection. A further object of the present invention is to provide a method for switching a function using handwriting detection.

According to a first aspect of the invention at least one of the above mentioned objects is achieved in a method for unlocking a lock mode of an electronic device comprising receiving a request for unlocking a touch screen, providing a handwriting detection space for receiving handwriting, reading coordinate information of at least one or more strokes handwritten in the handwriting detection window, deriving first character information from the read coordinate information, determining if the first character information is consistent with preset second character information, and if so, unlocking the touch screen; otherwise keeping the touch screen locked.

A lock mode is defined as a mode in which the device performs its present function. Outside the lock mode, so when the electronic device is unlocked, the electronic device can perform other functions. According to another aspect of the present invention , at least one of the above mentioned objects is achieved in a method for unlocking a lock mode of an electronic device comprising receiving a request for execution of the application, determining if the application is set to be locked for use of an application, providing a handwriting detection space such as a window, receiving handwriting if the application is locked, reading coordinate information of at least one or more strokes handwritten from the handwriting detection window, deriving first character information from the read coordinate information, determining if the first character information are consistent with preset second character information, and if so, running the application; otherwise not running the application.

According to a further aspect of the present invention at least one of the above mentioned objects is achieved in a method for unlocking a lock mode of an electronic device comprising receiving a request for switching from the first function to the second function, identifying setting or non-setting of limitation of use of a second function when, providing a handwriting detection window for receiving handwriting when there is the setting of limitation of use of the second function, reading coordinate information of at least one or more strokes handwritten in the handwriting detection window, deriving first character information from the read coordinate information, identifying if the first character information are consistent with preset second character information, and switching from the first function to the second function when the first character information are consistent with the second character information and keeping the first function when the first character information are not consistent with the second character information.

According to yet another aspect of the present invention at least one of the above mentioned objects is achieved in, a device for unlocking a lock mode comprising a touch screen configured to detect the presence and location of a touch, one or more processors configured to execute computer programs, a memory configured to store data and instructions, and one or more instruction modules stored in the memory and configured to be executed by the one or more processors , wherein the controller is configured to receive a request for unlocking the touch screen, to display a handwriting detection window for receiving handwriting on the touch screen, to read coordinate information of at least one or more strokes handwritten in the handwriting detection window, to derive first character information from the read coordinate information, to determine if the first character information is consistent with preset second character information, and if so, to unlock the touch screen and, otherwise to keep the touch screen locked.

According to still another aspect of the present invention at least one of the above mentioned objects is achieved in, an operating apparatus of an electronic device is provided. The apparatus comprises a touch screen configured to detect the presence and location of a touch, one or more processors configured to execute computer programs, a memory configured to store data and instructions, and one or more modules stored in the memory and configured to be executed by the one or more processors. The processor is configured to determine if the application is set to be locked for use of an application when receiving a request for execution of the application, display a handwriting detection space such as a window for receiving handwriting on the touch screen when the application is locked, read coordinate information of at least one or more strokes handwritten in the handwriting detection window, derive first character information from the read coordinate information, determine if the first character information are consistent with preset second character information, and if so, run the application; otherwise, not run the application.

According to still another aspect of the present invention at least one of the above mentioned object is achieved in, an apparatus for unlocking a lock mode is provided. The apparatus comprises a touch screen configured to detect the presence and location of a touch, one or more processors configured to execute computer programs, a memory configured to store data and instructions, and one or more modules stored in the memory and configured to be executed by the one or more processors. The processor is configured to determine if the second application is set to be locked for use when receiving a request for switching from the first function to the second function, provide a handwriting detection space such as a window for receiving handwriting if the second application is locked, read coordinate information of at least one or more strokes handwritten in the handwriting detection space, derive first character information from the read coordinate information, determine if the first character information are consistent with preset second character information, and if so, switch from the first function to the second function; otherwise, keeps the first function.

According to still another aspect of the present invention at least one of the above mentioned object is achieved in a computer program comprising computer program code means adapted to perform all the steps of any one of the method claims 1 to 10 when the computer program is run on the device..

Further advantageous embodiments of the invention are defined in the dependent claims.

Before undertaking the DETAILED DESCRIPTION OF THE INVENTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

**BRIEF DESCRIPTION OF THE DRAWINGS**

For a more complete understanding of the present disclosure and its advantages, reference is now made to the following description taken in conjunction with the accompanying drawings, in which like reference numerals represent like parts:

FIG. 1 is a diagram depicting a locked screen provided in a portable electronic device with a touch screen according to the conventional art;

FIG. 2 is a block diagram illustrating a construction of a portable electronic device according to an exemplary embodiment of the present disclosure;

FIG. 3 is a flowchart illustrating an unlocking procedure of an electronic device with a touch screen according to an exemplary embodiment of the present disclosure;

FIGS. 4A, 4B and 4C are diagrams illustrating a user interface screen for unlocking an electronic device with a touch screen according to an exemplary embodiment of the present disclosure;

FIGS. 5A, 5B and 5C are diagrams illustrating a user interface screen for unlocking an electronic device with a touch screen according to an exemplary embodiment of the present disclosure;

FIGS. 6A, 6B and 6C are diagrams illustrating a user interface screen for unlocking of an electronic device with a touch screen according to another exemplary embodiment of the present disclosure;

FIGS. 7A, 7B and 7C are diagrams illustrating a user interface screen for unlocking of an electronic device with a touch screen according to another exemplary embodiment of the present disclosure;

FIG. 8 is a flowchart illustrating an execution procedure for an application S/W in an electronic device with a touch screen according to an exemplary embodiment of the present disclosure;

FIGS. 9A, 9B and 9C are diagrams illustrating a user interface screen for application S/W execution on an electronic device with a touch screen according to an exemplary embodiment of the present disclosure;

FIGS. 10A, 10B and 10C are diagrams illustrating a user interface screen for application execution on an electronic device with a touch screen according to another exemplary embodiment of the present disclosure;

FIG. 11 is a flowchart illustrating a function switching procedure in an electronic device with a touch screen according to an exemplary embodiment of the present disclosure;

FIGS. 12A, 12B and 12C are diagrams illustrating a user interface screen for function switching in an electronic device with a touch screen according to an exemplary embodiment of the present disclosure; and

FIGS. 13A, 13B and 13C are diagrams illustrating a user interface screen for function switching of an electronic device with a touch screen according to another exemplary embodiment of the present disclosure.

### DETAILED DESCRIPTION OF THE INVENTION

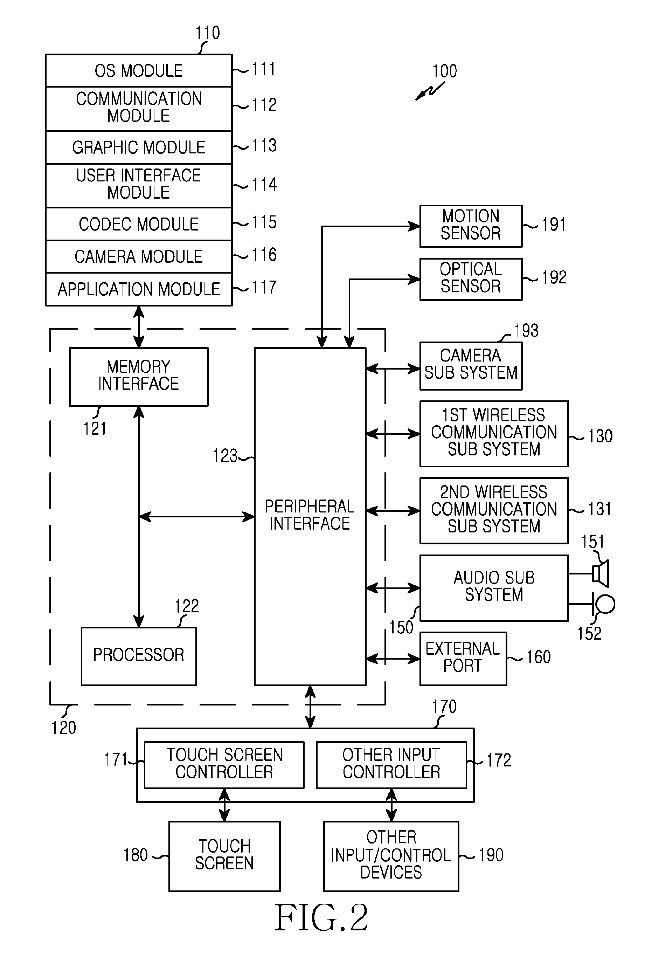

FIGURES 2 through 13C, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged electronic device with a touch screen. Preferred embodiments of the present disclosure will be described herein below with reference to the accompanying drawings. In the following description, well-known functions or constructions are not described in detail since they would obscure the disclosure in unnecessary detail. And, terms described below, which are defined considering functions in the present disclosure, can be different depending on user and operator's intention or practice. Therefore, the terms should be defined on the basis of the disclosure throughout this specification.

The present disclosure provides an electronic device with a touch screen for unlocking the screen using handwriting detection, running an application, or switching a function, and an operating method thereof. The handwriting detection is a technology for judging which character from a coordinate string coming in according to the order of being handwritten in a handwriting detection window provided in the touch screen. An electronic device with a touch screen according to the present disclosure and an operating method thereof strengthen security and improve User eXperience (UX).

FIG. 2 is a block diagram illustrating a construction of an electronic device according to an exemplary embodiment of the present disclosure. The electronic device 100 can be a portable electronic device or can be a device such as a portable terminal, a mobile phone, a mobile pad, a media player, a tablet computer, a handheld computer, or a Personal Digital Assistant (PDA). Also, the electronic device 100 can be an arbitrary electronic device including a device having a combination of two or more functions among these. devices.

The electronic device 100 can include a memory 110, a processor unit 120, a first wireless communication sub system 130, a second wireless communication sub system 131, an audio sub system 150, a speaker 151, a microphone 152, an external port 160, an Input/Output (I/O) sub system 170, a touch screen 180, and other input or control devices 190. The memory 110 and the external port 160 can be constructed in plural.

The processor unit 120 can include a memory interface 121, one or more processors 122, and a peripheral interface 123. The whole processor unit 120 is also called a processor. The memory interface 121, the one or more processors 122, and/or the peripheral interface 123 can be separate constituent elements or can be integrated into one or more integrated circuits.

The processor 122 executes various software programs and performs various functions for the electronic device 100, and also performs processing and control for voice communication, video communication, and data communication. Also, in addition to this general function, the processor 122 executes a software module (i.e., an instruction set) stored in the memory 110 and performs various functions corresponding to the software module. Also, in addition to this general function, the processor 122 plays even a role of executing a specific software module (i.e., an instruction set) stored in the memory 110 and performing specific various functions corresponding to the software module. That is, the processor 122 carries out methods according to exemplary embodiments of the present disclosure in conjunction with the software modules stored in the memory 110.

The processor 122 can include one or more data processors, image processors, or COder/DECoders (CODECs). The electronic device 100 can construct separately the data processor, the image processor, or the CODEC. The peripheral interface 123 connects the I/O sub system 170 of the electronic device 100 and various peripheral devices thereof to the processor 122. Furthermore, the peripheral interface 123 connects the I/O sub system 170 of the electronic device 100 and various peripheral devices thereof to the memory 110 through the memory interface 121.

Various constituent elements of the electronic device 100 can be connected with one another by one or more communication buses (not denoted by reference numerals) or stream lines (not denoted by reference numerals).

The external port 160 directly connects the electronic device 100 to other electronic devices or indirectly connects the electronic device 100 to other electronic devices through a network (for example, the Internet, an intranet, a wireless Local Area Network (LAN) and the like). For example, the external port 160 refers to a Universal Serial Bus (USB) port or a FIREWIRE port and the like, although the invention is not limited to these.

A motion sensor 191 and an optical sensor 192 are connected to the peripheral interface 123 and enable various functions. For instance, the motion sensor 191 and the optical sensor 192 can be connected to the peripheral interface 123, and sense a motion of the electronic device 100 and sense a light from the exterior, respectively. Besides this, other sensors such as a position sensor, a temperature sensor, a biological sensor and the like can be connected to the peripheral interface 123 and perform related functions.

A camera sub system 193 can perform a camera function such as photograph and video clip recording and the like. The optical sensor 192 can be a Charged Coupled Device (CCD) device or Complementary Metal-Oxide Semiconductor (CMOS) device for the camera sub system 193.

The first and second wireless communication sub systems 130 and 131 enable communication. The first and second wireless communication sub systems 130 and 131 can include a radio frequency receiver and transceiver and/or an optical (e.g., infrared) receiver and transceiver. The first and second communication sub systems 130 and 131 can be distinguished according to a communication network. For example, the first and second wireless communication sub systems 130 and 131 can be designed to operate through one of a Global System for Mobile Communication (GSM) network, an Enhanced Data GSM Environment (EDGE) network, a Code Division Multiple Access (CDMA) network, a Wireless-Code Division Multiple Access (W-CDMA) network, a Long Term Evolution (LTE) network, an Orthogonal Frequency Division Multiple Access (OFDMA) network, a Wireless Fidelity (Wi-Fi) network, a Wireless interoperability for Microwave Access (WiMAX) network or/and a Bluetooth network.

The audio sub system 150 is connected to the speaker 151 and the microphone 152, and takes charge of audio-related functions such as voice recognition, voice copy, digital recording and calling function. That is, the audio sub system 150 communicates with a user through the speaker 151 and the microphone 152. The audio sub system 150 receives a data signal through the peripheral interface 123 of the processor unit 120, converts the received data signal into an electric signal, and provides the converted electric signal to the speaker 151. The speaker 151 converts the electric signal into a sound wave audible by a person and outputs the converted sound wave. The microphone 152 converts a sound wave forwarded from the person or other sound sources into an electric signal. The audio sub system 150 receives an electric signal from the microphone 152, converts the received electric signal into an audio data signal, and transmits the converted audio data signal to the peripheral interface 123. The audio sub system 150 can include a detachable earphone, headphone or headset.

The I/O sub system 170 includes a touch screen controller 171 and/or other input controller 172. The touch screen controller 171 is connected to the touch screen 180 and determines events of a touch contact, a touch motion and the like through the touch screen 180. The touch screen 180 and the touch screen controller 171 can use not only capacitive, resistive, infrared and surface acoustic wave technologies but also any arbitrary multi-touch sensing technology utilizing other proximity sensor arrays. The other input controller 172 can be coupled to the other input/control devices 190. The other input/control devices 190 can include up/down buttons for volume adjustment. Furthermore, the other input/control devices 190 can include one or more push buttons, a rocker button/switch, a thumb-wheel, a dial, a stick, and a pointer device such as a stylus and the like.

The touch screen 180 provides an input and output interface between the electronic device 100 and a user. The touch screen 180 forwards a user's touch input to the electronic device 100, and displays visual information (e.g., a text, a graphic, a video and the like) from the electronic device 100 to the user.

Generally, the touch screen 180 can include a display, a touch panel and a touch sensor. The display can be various in kind. For instance, the display can be any one of a Liquid Crystal Display (LCD), a Light Emitting Diode (LED) display, a Light emitting Polymer Display (LPD), an Organic Light Emitting Diode (OLED) display, an Active Matrix Organic Light Emitting Diode (AMOLED) display and a Flexible LED (FLED) display.

The memory 110 is connected to the memory interface 121. The memory 110 includes one or more high-speed random access memories and/or nonvolatile memories such as magnetic disk storage devices, one or more optical storage devices and/or flash memories (for example, a Not AND (NAND) memory, a Not OR (NOR) memory).

The memory 110 stores software. The software includes an Operating System (OS) module 111, a communication module 112, a graphic module 113, a user interface module 114, a CODEC module 115, a camera module 116, one or more application modules 117 and the like. The term 'module' is also expressed as a set of instructions or an instruction set or a program.

The OS software 111 represents a built-in operating system such as WINDOWS, LINUX, Darwin, RTXC, UNIX, OS X, or VxWorks, and includes various software constituent elements controlling general system operation. The control of the general system operation includes memory management and control, storage hardware (device) control and management, power control and management and the like. Furthermore, the OS software 111 performs even a function of making smooth communication between various hardware (device) and software constituent elements (modules).

The communication module 112 can enable communication with the counterpart electronic device such as a personal computer, a server and/or a portable terminal through the first and second wireless communication sub systems 130 and 131 or the external port 160.

The graphic module 113 includes various software constituent elements for providing and displaying a graphic on the touch screen 180. The term 'graphic' includes a text, a web page, an icon, a digital image, a video, an animation and the like.

The user interface module 114 includes various software constituent elements associated with a user interface. Furthermore, the user interface module 114 includes information about how a state of the user interface is changed, in which conditions the change of the state of the user interface is carried out.

The CODEC module 115 includes a software related to encoding and decoding of a video file. The camera module 116 includes a software enabling camera-related processes and functions.

The application module 117 can include, for example, a browser, an electronic mail (e-mail), an instant message, word processing, keyboard emulation, an address book, a touch list, a widget, Digital Right Management (DRM), voice recognition, voice copy, a location determining function, a location-based service and the like. The memory 110 can include additional modules (i.e., instructions) besides the above-mentioned modules.

Also, various functions of the electronic device 100 according to the present disclosure can be executed by hardware including one or more stream processing and/or Application Specific Integrated Circuits (ASICs), and/or software, and/or a combination of them.

The processor 122 constitutes an unlock means using at least one or more constituent elements illustrated in FIG. 2. For instance, the processor 122 constitutes a handwriting detection means for providing a handwriting detection window for receiving handwriting when receiving an unlock request, reading coordinate information of at least one or more strokes handwritten in the handwriting detection window, and deriving first character information. Also, the processor 122 constitutes a comparison means for providing an enable signal when the first character information derived by the handwriting detection means is consistent with preset second character information, and provides a disable signal when they are not consistent with each other. Furthermore, the processor 122 constitutes a control means for unlocking a screen upon receiving the enable signal from the comparison means; keeping a screen locked upon receiving the disable signal from the comparison means.

Also, the processor 122 constitutes application execution means using at least one or more constituent elements illustrated in FIG. 2. For example, the processor 122 constitutes an identification means for identifying setting or non-setting of limitation of use of the application upon receiving a request for execution of a corresponding application,. Also, the processor 122 constitutes a handwriting detection means for providing a handwriting detection window for receiving handwriting when receiving the identification of setting of limitation of use of the application from the identification means, reading coordinate information of at least one or more strokes handwritten in the handwriting detection window, and deriving first character information. Furthermore, the processor 122 constitutes a comparison means for providing an enable signal when the first character information derived by the handwriting detection means is consistent with preset second character information, and providing a disable signal when they are not consistent with each other. Also, the processor 122 constitutes a control means for executing the application when receiving the enable signal from the comparison means, and not executing the application when receiving the disable signal from the comparison means.

Furthermore, the processor 122 constitutes function switching means using at least one or more constituent elements illustrated in FIG. 2. For example, the processor 122 constitutes an identification means for, when receiving a request for switching from a first function to a second function, identifying setting or non-setting of limitation of use of the second function. Also, the processor 122 constructs a handwriting detection means for providing a handwriting detection window for receiving handwriting, reading coordinate information of at least one or more strokes handwritten in the handwriting detection window when receiving the identification of the setting of limitation of use of the second function from the identification means, and deriving first character information. Furthermore, the processor 122 constitutes a comparison means for providing an enable signal when the first character information derived by the handwriting detection means is consistent with preset second character information, and when they are not consistent with each other, providing a disable signal. Also, the processor 122 constitutes a control means for switching from the first function to the second function, when receiving the enable signal from the comparison means, and when receiving the disable signal from the comparison means, keeping the first function.

The first character information derived from the handwriting detection means can include at least one or more characters or character strings which are composed of at least one or more of a letter, a symbol, a numeral, and a figure. Furthermore, the first character information extracted from the handwriting detection means can additionally include a form of the character or the character string. The form can include at least one or more of a font, a font size, and a screen position.

Furthermore, the processor 122 can execute at least one or more modules stored in the memory 110. The module can follow an operating procedure of the electronic device according to the present disclosure.

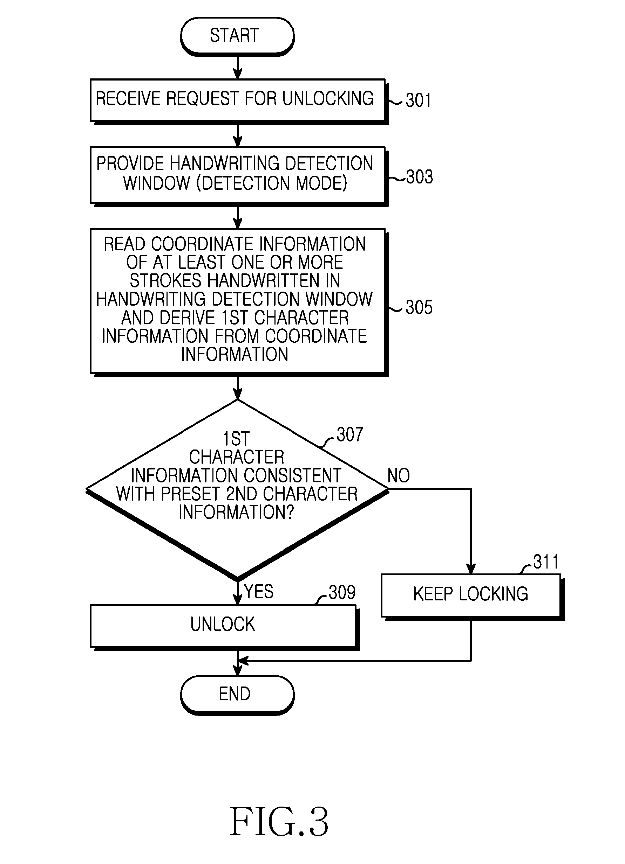

FIG. 3 is a flowchart illustrating an unlocking procedure of an electronic device with a touch screen according to an exemplary embodiment of the present disclosure. In step 301, the processor 122 receives a request for unlocking the touch screen and in step 303, the processor 122 provides a handwriting detection window (i.e., a handwriting detection mode or a handwriting detector).

In step 305, the processor 122 reads coordinate information of at least one or more strokes handwritten in the handwriting detection window and derives first character information from the read coordinate information. The first character information capable of being derived by the processor 122 can include at least one or more characters or character strings that comprise at least one or more of a letter, a symbol, a numeral and a figure. Furthermore, the first character information capable of being derived by the processor 122 can include various forms of the character or character string, for example, a font, a font size, a screen position and the like.

Next, in step 307, the processor 122 determines if the first character information is consistent with preset second character information. The second character information can include a nonstandard character defined by a user and a form of the nonstandard character.

When it is identified in step 307 that the first character information is consistent with the second character information, in step 309, the processor 122 unlocks the touch screen. In contrast, when it is identified in step 307 that the first character information is not consistent with the second character information, in step 311, the processor 122 keeps the touch screen locked.

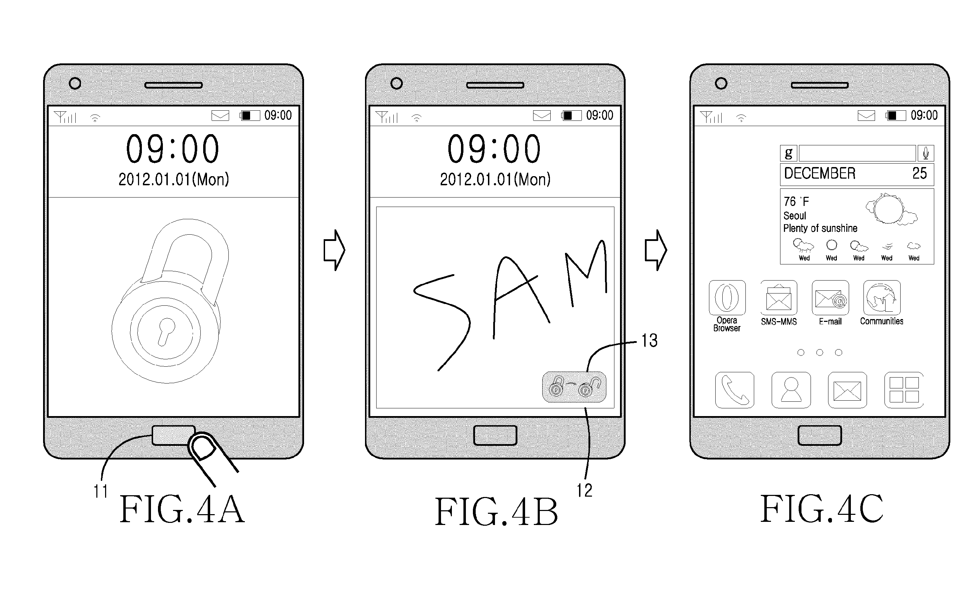

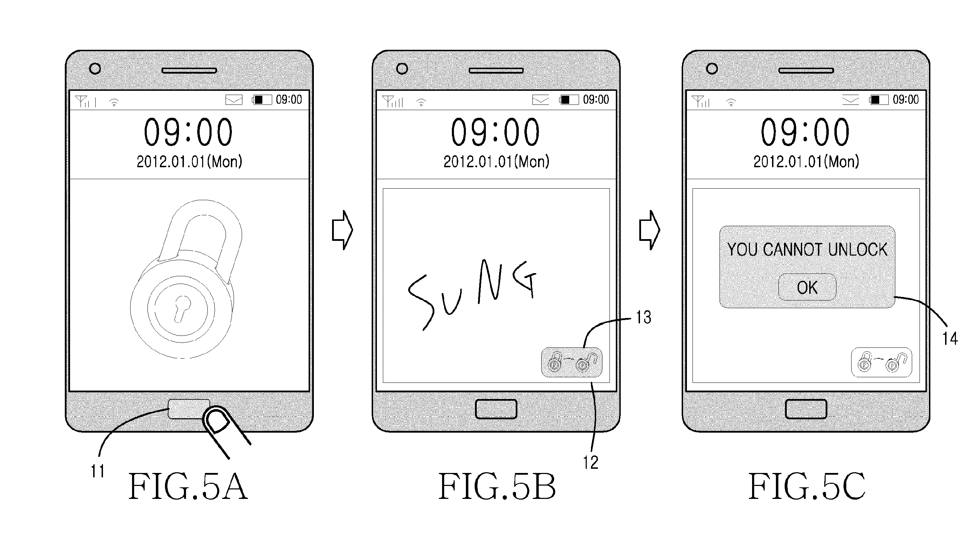

FIGS. 4A, 4B and 4C are diagrams illustrating a user interface screen for unlocking an electronic device with a touch screen according to an exemplary embodiment of the present disclosure. FIGS. 5A, 5B and 5C are diagrams illustrating a user interface screen for unlocking an electronic device with a touch screen according to an exemplary embodiment of the present disclosure.

FIGS. 4A, 4B and 4C, and 5A, 5B and 5C depict a user interface screen for unlocking an electronic device. The electronic device 100 has been locked and when a user presses a specific software button or hardware button 11, the electronic device 100 provides a handwriting detection window 12. The user handwrites in the handwriting detection window 12 and presses a button 13 for notifying the end of handwriting. The electronic device 100 reads coordinate information of at least one or more strokes handwritten in the handwriting detection window 12 and derives at least one or more characters or character strings, for example, letters from the read coordinate information. Next, the electronic device 100 determines if the derived at least one or more letters are consistent with preset at least one or more letters.

Referring to FIG. 4A, 4B and 4C, when the derived at least one or more letters are consistent with the preset at least one or more letters, the electronic device 100 unlocks the touch screen.

Referring to FIG. 5A, 5B and 5C, when the derived at least one or more letters are not consistent with the preset at least one or more letters, the electronic device 100 does not unlock the touch screen and notifies this to the user as denoted by reference numeral 14.

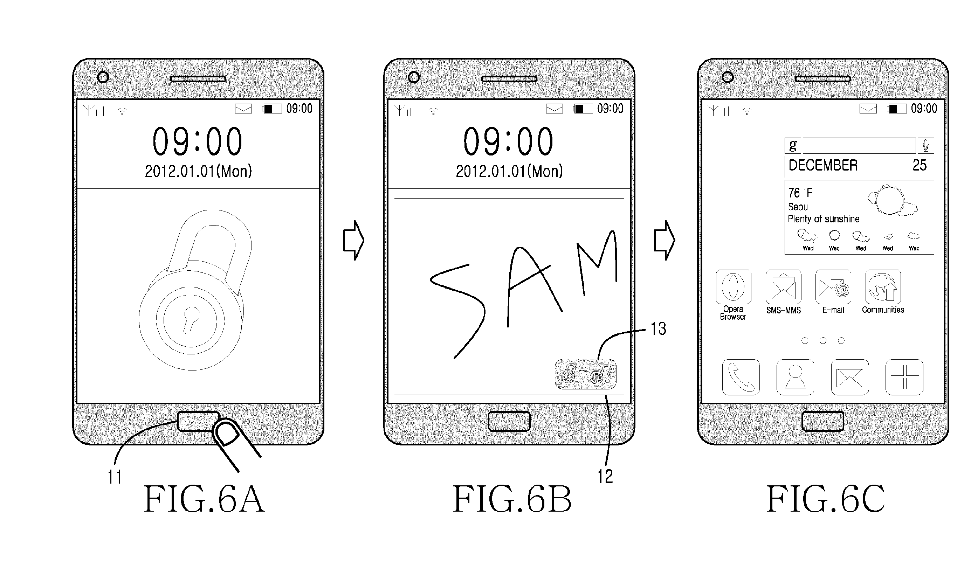

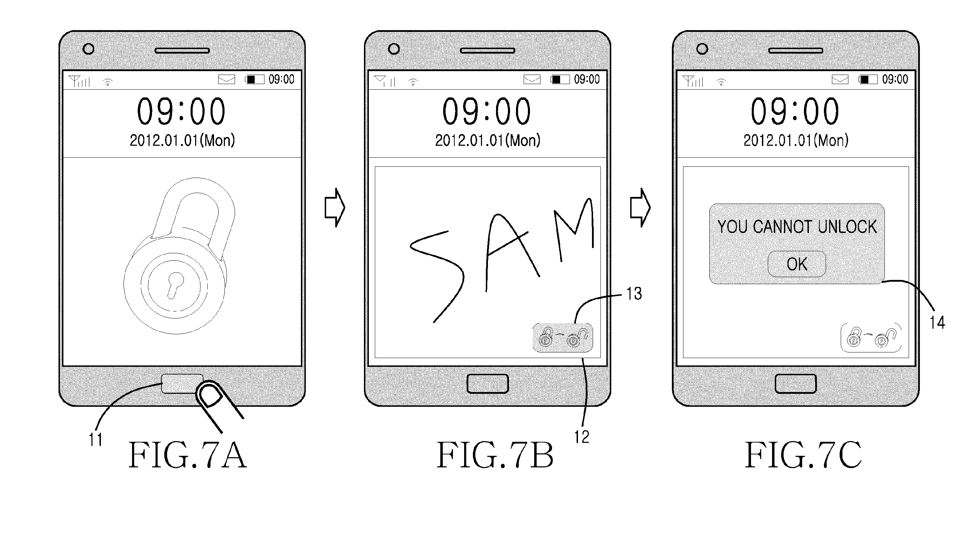

FIGS. 6A, 6B and 6C are diagrams illustrating a user interface screen for unlocking of an electronic device with a touch screen according to another exemplary embodiment of the present disclosure. FIGS. 7A, 7B and 7C are diagrams illustrating a user interface screen for unlocking of an electronic device with a touch screen according to another exemplary embodiment of the present disclosure.

FIGS. 6A, 6B and 6C, and 7A, 7B and 7C depict a user interface screen for unlocking of an electronic device. The electronic device 100 has been locked and, when a user presses a specific software button or hardware button 11, the electronic device 100 provides a handwriting detection window 12. The user handwrites in the handwriting detection window 12 and presses a button 13 for notifying the end of handwriting. The electronic device 100 reads coordinate information of at least one or more strokes handwritten in the handwriting detection window 12 and derives at least one or more letters from the read coordinate information. Furthermore, the electronic device 100 reads coordinate information of at least one or more strokes handwritten from the handwriting detection window 12 and derives a form of the letter, for example, a font.

Next, the electronic device 100 determines if the derived letters and font are consistent with preset at least one or more letters and font.

Referring to FIG. 6A, 6B and 6C, when the derived at least one or more letters and font are consistent with the preset at least one or more letters and font, the electronic device 100 unlocks the touch screen.

Referring to FIG. 7A, 7B and 7C, when the derived at least one or more letters and font are not consistent with the preset at least one or more letters and font, the electronic device 100 does not unlock the touch screen and notifies this to the user as denoted by reference numeral 14.

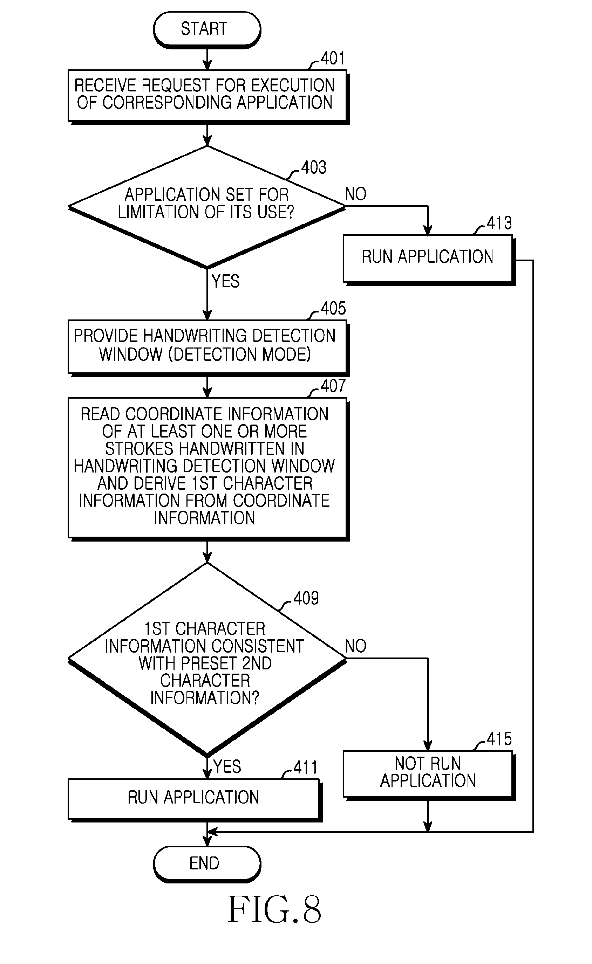

FIG. 8 is a flowchart illustrating an application execution procedure of an electronic device with a touch screen according to an exemplary embodiment of the present disclosure. Referring to FIG. 8, in step 401, the processor 122 receives a request for execution of a corresponding application.

Next, in step 403, the processor 122 determines if the application is set to be locked for execution. When it is determined in step 403 that the application is not set to be locked, the processor 122 runs the application in step 413. Alternatively, when it is determined in step 403 that the application is set to be locked for its use, the processor 122 provides a handwriting detection window (i.e., a handwriting detection mode or a handwriting detector) in step 405.

After that, in step 407, the processor 122 reads coordinate information of at least one or more strokes handwritten from the handwriting detection window and derives first character information from the read coordinate information.

Next, in step 409, the processor 122 determines if the derived first character information is consistent with preset second character information. When it is identified in step 409 that the first character information is consistent with the preset second character information, in step 411, the processor 122 runs the application. In contrast, when it is identified in step 409 that the first character information is not consistent with the preset second character information, the processor 122 does not run the application in step 415.

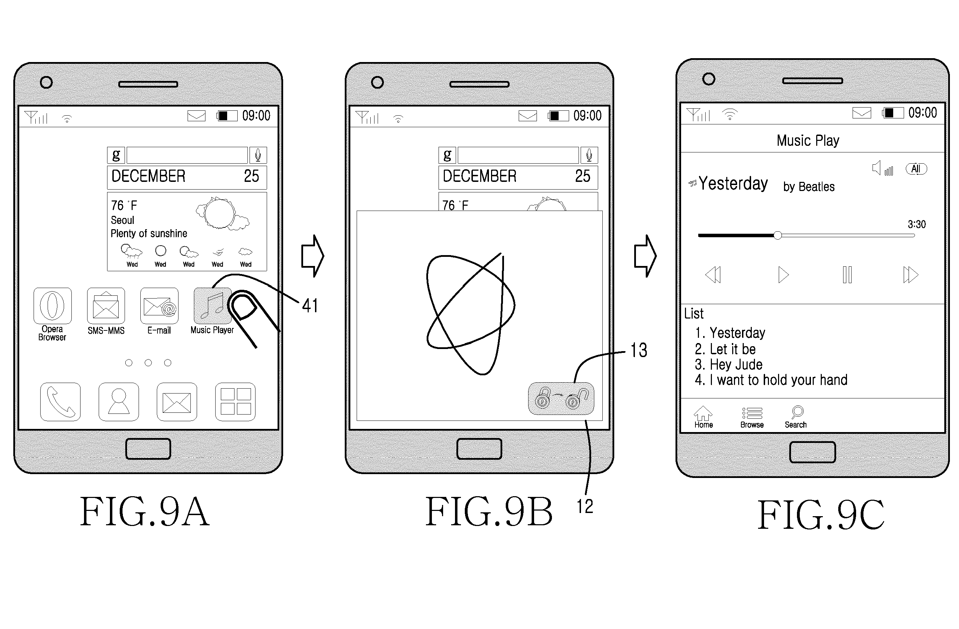

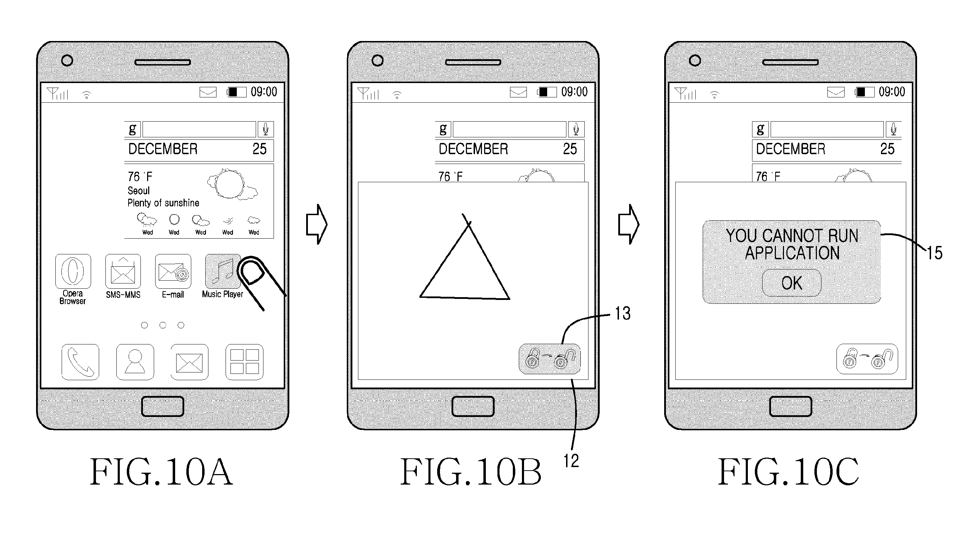

FIGS. 9A, 9B and 9C are diagrams illustrating a user interface screen for application execution of an electronic device with a touch screen according to an exemplary embodiment of the present disclosure. FIGS. 10A, 10B and 10C are diagrams illustrating a user interface screen for application execution of an electronic device with a touch screen according to another exemplary embodiment of the present disclosure.

FIGS. 9A, 9B and 9C, and 10A, 10B and 10C depict a user interface screen for application execution of an electronic device. A user touches an icon 41 of an application intended for execution. In a case where the application is set for limitation of its use, the electronic device 100 provides a handwriting detection window 12. The user handwrites in the handwriting detection window 12 and presses a button 13 for notifying the end of handwriting. The electronic device 100 reads coordinate information of at least one or more strokes handwritten from the handwriting detection window 12 and derives at least one or more characters or character strings, for example, figures from the read coordinate information. Next, the electronic device 100 determines if the derived at least one or more figures are consistent with preset at least one or more figures.

Referring to FIG. 9A, 9B and 9C, when the derived at least one or more figures are consistent with the preset at least one or more figures, the electronic device 100 executes the application.

Referring to FIG. 10A, 10B and 10C, when the derived at least one or more figures are not consistent with the preset at least one or more figures, the electronic device 100 does not run the application and notifies this to the user as denoted by reference numeral 15.

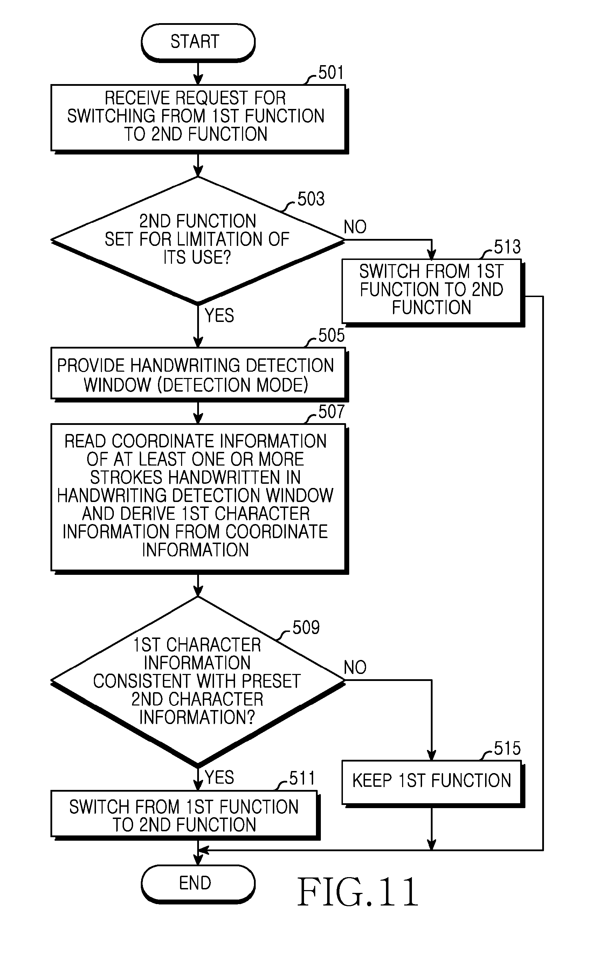

FIG. 11 is a flowchart illustrating a function switching procedure of an electronic device with a touch screen according to an exemplary embodiment of the present disclosure. Referring to FIG. 11, in step 501, the processor 122 receives a request for switching from a first function to a second function.

Next, in step 503, the processor 122 determines if the second function is set to be locked for its use.

When it is identified in step 503 that the second function is not locked for its use, in step 513, the processor 122 switches from the first function to the second function. In contrast, when it is identified in step 503 that the second function is locked, the processor 122 provides a handwriting detection window (i.e., a handwriting detection mode or a handwriting detector) in step 505.

After that, in step 507, the processor 122 reads coordinate information of at least one or more strokes handwritten in the handwriting detection window and derives first character information from the read coordinate information.

Next, in step 509, the processor 122 determines if the first character information is consistent with preset second character information.

When it is identified in step 509 that the first character information is consistent with the preset second character information, the processor 122 switches from the first function to the second function in step 511. In contrast, when it is identified in step 509 that the first character information is not consistent with the preset second character information, the processor 122 keeps the first function in step 515.

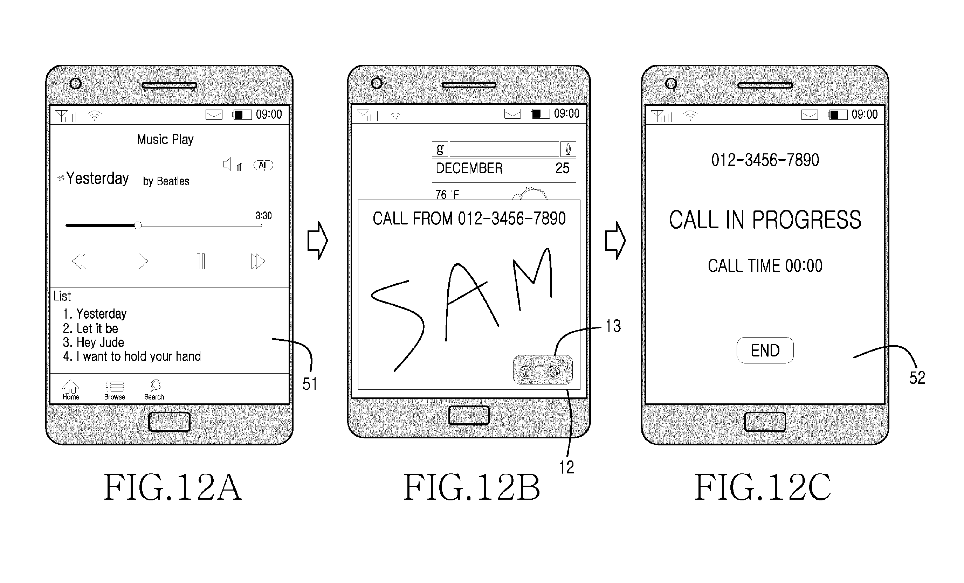

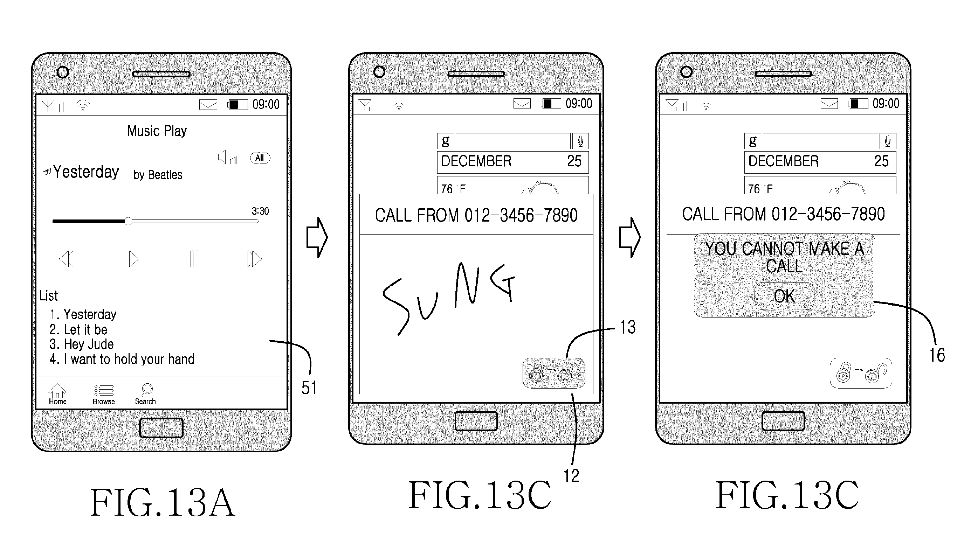

FIGS. 12A, 12B and 12C are diagrams illustrating a user interface screen for function switching of an electronic device with a touch screen according to an exemplary embodiment of the present disclosure. FIGS. 13A, 13B and 13C are diagrams illustrating a user interface screen for function switching of an electronic device with a touch screen according to another exemplary embodiment of the present disclosure.

FIGS. 12A, 12B and 12C, and 13A, 13B and 13C are diagrams illustrating a user interface screen for function switching. The electronic device 100 receives a request for switching from a first function to a second function (step 501). For instance, in a case where a call is received during the execution of a music play function 51, the electronic device 100 considers switching to a call function 52.

The electronic device 100 determines if the second function is set for limitation of its use (step 503). In a case where the second function is set to be locked for its use, the electronic device 100 provides a handwriting detection window 12. In one embodiment, a user handwrites in the handwriting detection window 12 and presses a button 13 for notifying the end of handwriting. The electronic device 100 reads coordinate information of at least one or more strokes handwritten in the handwriting detection window 12 and derives at least one or more letters from the read coordinate information. Next, the electronic device 100 determines if the derived at least one or more letters are consistent with preset at least one or more letters.

Referring to FIG. 12A, 12B and 12C, when the derived at least one or more letters are consistent with the preset letters, the electronic device 100 switches from the first function (e.g., the music play function) to the second function (e.g., the call function).

Referring to FIG. 13A, 13B and 13C, when the derived at least one or more letters are not consistent with the preset letters, the electronic device 100 keeps the first function (e.g., the music play function) and notifies this to the user as denoted by reference numeral 16.

Methods according to exemplary embodiments disclosed in claims and/or the specification of the present disclosure can be implemented in a form of hardware, software, or a combination of hardware and software. In case of implementing in software, a computer readable storage medium storing one or more programs (i.e., software modules) can be provided. One or more programs stored in the computer readable storage medium are configured to be executable by one or more processors within an electronic device. One or more programs include instructions for enabling the electronic device to execute the methods according to the exemplary embodiments disclosed in the claims and/or the specification of the present disclosure.

These programs (i.e., software modules or software) can be stored in a Random Access Memory (RAM), a nonvolatile memory including a flash memory, a Read Only Memory (ROM), an Electrically Erasable Programmable ROM (EEPROM), a magnetic disk storage device, a Compact Disk ROM (CD-ROM), a Digital Versatile Disk (DVD) or an optical storage device of other form, and a magnetic cassette. Or, they can be stored in a memory configured by a combination of some or all of them. Also, each configuration memory can be included in plural.

Furthermore, the programs can be stored in an attachable storage device accessible to an electronic device through a communication network such as the Internet, an intranet, a Local Area Network (LAN), a Wireless LAN (WLAN), or a Storage Area Network (SAN), or a communication network configured by a combination of them. This storage device can access the electronic device through an external port. Furthermore, a separate storage device on a communication network can access the portable electronic device.

In conclusion, an electronic device according to the present disclosure and an operating method thereof strengthen security and improve User eXperience (UX).

While the disclosure has been shown and described with reference to certain preferred embodiments thereof, it will be understood by those skilled in the art that various changes in form and details may be made therein without departing from the scope of the disclosure as defined by the appended claims.

## Claims

1. A method for unlocking a lock mode of an electronic device, the method comprising:
receiving a request for unlocking a touch screen;
providing a handwriting detection space for receiving handwriting;
reading coordinate information of at least one or more strokes handwritten in the handwriting detection space;
deriving first character information from the read coordinate information; and
determining if the first character information is consistent with preset second character information, and if so, unlocking the touch screen; otherwise, keeping the touch screen locked.

2. The method of claim 1, wherein the first character information includes at least one or more characters or character strings, both being comprised of at least one or more of a letter, a symbol, a numeral and a figure.

3. The method of claim 2, wherein the first character information includes a form of the character or character string, the form comprising at least one or more of a font, a font size and a screen position.

4. The method of claim 1, wherein the first character information includes at least one nonstandard character defined by a user.

5. The method of claim 1, wherein the handwriting detection space is in a form of a window.

6. A device for unlocking a lock mode of the device, the device comprising:
a touch screen configured to detect presence and location of a touch;
one or more processors configured to execute computer programs;
a memory configured to store data and instructions; and
one or more instruction modules stored in the memory and configured to be executed by the one or more processors,
wherein the controller is configured to receive a request for unlocking the touch screen, to display a handwriting detection space for receiving handwriting on the touch screen, to read coordinate information of at least one or more strokes handwritten in the handwriting detection window, to derive first character information from the read coordinate information, to determine if the first character information is consistent with preset second character information, and if so, to unlock the touch screen; otherwise, to keep the touch screen locked.

7. The device of claim 6, wherein the first character includes at least one or more characters or character strings, both being composed of at least one or more of a letter, a symbol, a numeral and a figure.

8. The device of claim 7, wherein the first character information includes a form of the character or character string, the form comprising at least one or more of a font, a font size and a screen position.

9. The device of claim 6, wherein the first character information includes at least one nonstandard character defined by a user.

10. The device of claim 6, wherein the handwriting detection space is in a form of a window.

11. A computer program comprising computer program code means adapted to perform all the steps of any one of the method claims 1 to 10 when the computer program is run on a digital device.
